# EUROPEAN PATENT APPLICATION

(11) **EP 2 657 838 A1**
(43) Date of publication of application: **30.10.2013**
(21) Application number: 11850978.5
(22) Date of filing: 12.12.2011
(51) Int. Cl.: G06F 9/445, H04N 5/76

(54) **INFORMATION PROCESSING DEVICE, INFORMATION PROCESSING METHOD, AND COMPUTER PROGRAM**

(30) Priority: 21.12.2010 JP 2010284585
(71) Applicant: Sony Corporation, Tokyo 108-0075 (JP)
(72) Inventor: KURNIAWAN, Sonny, Tokyo 108-0075 (JP); KUROSAKI, Daisuke, Tokyo 108-0075 (JP); NAKAGAWA, Noriaki, Tokyo 108-0075 (JP)
(74) Representative: Körber, Martin Hans
(86) International application number: PCT/JP2011/078698
(87) International publication number: WO 2012/086442

(57) **Abstract**

Provided is an information processing apparatus including a recording unit in which operating systems are recorded in dedicated areas of the operating systems and information set by at least the one operating system is recorded in a common area capable of being referred to by any of the operating systems, and a control unit including a setting storage unit in which the information set by the operating system having set the information to the common area is stored and a stored setting is deleted when any of the plurality of operating systems is activated, and referring to the set information while another operating system different from the operating system having set the information to the common area is active, the other operating system performing specific processing based on the information before performing processing based on the setting in the operating system having set the information to the common area.

## Description

### Technical Field

The present disclosure relates to an information processing apparatus, an information processing method, and a computer program.

### Background Art

A RTC Wake timer is set to a chip set so that an information processing apparatus such as a personal computer (PC) is automatically activated from a shutdown state. When the time specified by the timer comes, the chip set to which the Wake timer is set automatically activates the information processing apparatus from the shutdown state.

A conventional information processing apparatus can store only one Wake timer in the chip set and a limitation is imposed that once activated, the timer becomes invalid. Thus, when one operating system (OS) is installed in such an information processing apparatus, the OS holds a list of activation reservations and when the information processing apparatus is activated, the OS resets the Wake timer value. Accordingly, continuous execution of activation reservations held in the list is realized, this method is used for preset recordings of, for example, TV programs, and the conventional information processing apparatus sets the activation time for activation before the recording start time so that the recording is normally started at the time at which the recording is set.

### Citation List

### Patent Literature

Patent Literature 1: Japanese Patent Application Laid-Open No. 2005-202691

### Summary of Invention

### Technical Problem

However, when a plurality of OSs is installed in an information processing apparatus, problems as described below have been known.

When, for example, two OSs are installed in an information processing apparatus (set, for example, as OS1, OS2), if after the OS1 shuts down the information processing apparatus by setting an RTC timer to the chip set, the OS2 activates the information processing apparatus, the timer becomes invalid. Also, if the time set to the Wake timer by the OS1 passes while the information processing apparatus is activated by the OS2 and the OS2 is used also thereafter, the activation reservation time in a list held by the OS1 is not set to the chip set when the OS2 shuts down the information processing apparatus.

For example, Patent Literature 1 is known as a technology of sharing information between OSs when a plurality of OSs is installed in an information processing apparatus. However, the technology disclosed by Patent Literature 1 is intended to generate a message used for operation of a second OS by a first OS and share the generated message between the OSs and does not solve the above problems.

The present disclosure is developed in view of the above problems and an object of the present disclosure is to provide a novel and improved information processing apparatus in which a plurality of OSs is installed and capable of linking information among OSs, acquiring information set by some OS during activation of another OS, and performing processing by the other OS based on the acquired information regardless of the OS by which the information processing apparatus is activated and even if content set by some OS is cleared, an information processing method, and a computer program.

### Solution to Problem

To solve the above issues, according to an embodiment of the present disclosure, there is provided an information processing apparatus including a recording unit in which a plurality of operating systems are recorded in dedicated areas of the operating systems and information set by at least the one operating system is recorded in a common area that is capable of being referred to by any of the plurality of operating systems, and a control unit that includes a setting storage unit in which the information set by the operating system having set the information to the common area is stored and a stored setting is deleted when any of the plurality of operating systems is activated, and refers to the set information while another operating system different from the operating system having set the information to the common area is active, the other operating system performing specific processing based on the information before performing processing based on the setting in the operating system having set the information to the common area.

The control unit may include an activation controller that controls automatic activation. The activation controller may manage a time of automatic activation under the operating system having set the information to the common area as the specific processing during operation under the other operating system.

The control unit may further include a setting reference unit that refers to the information set to the common area. The activation controller may acquire a time specified in a setting referred to by the setting reference unit and causes a message display when a predetermined time before the time comes.

The setting storage unit may store the time of the automatic activation under the operating system having set the information to the common area. The activation controller may store the time acquired by the setting reference unit in the setting storage unit before terminating the other operating system.

The setting reference unit may refer to the information about whether to permit the automatic activation specified in the setting referred to by the setting reference unit and, when the automatic activation is not permitted, the activation controller may not store the time acquired by the setting reference unit in the setting storage unit before terminating the other operating system.

The information processing apparatus may further include a broadcast receiving unit that receives television broadcasting. The information set to the common area may be information about a preset recording time of the television broadcasting received by the broadcast receiving unit.

The control unit may include an activation controller that controls automatic activation. The activation controller may perform control to cause the automatic activation under the operating system having set the information to the common area at a time a predetermined time before a recording start time that is the information about the preset recording time.

To solve the above issues, according to an embodiment of the present, there is provided an information processing method including recording a plurality of operating systems in dedicated areas of the operating systems and recording information set by at least the one operating system in a common area that is capable of being referred to by any of the plurality of operating systems, storing the information set by the operating system having set the information to the common area and deleting a stored setting when any of the plurality of operating systems is activated, and referring to the set information while another operating system different from the operating system having set the information to the common area is active and causing the other operating system to perform specific processing based on the information before performing processing based on the setting in the operating system having set the information to the common area.

To solve the above issues, according to an embodiment of the present disclosure, there is provided a computer program for causing a computer to execute recording a plurality of operating systems in dedicated areas of the operating systems and recording information set by at least the one operating system in a common area that is capable of being referred to by any of the plurality of operating systems, storing the information set by the operating system having set the information to the common area and deleting a stored setting when any of the plurality of operating systems is activated, and referring to the set information while another operating system different from the operating system having set the information to the common area is active and causing the other operating system to perform specific processing based on the information before performing processing based on the setting in the operating system having set the information to the common area.

### Advantageous Effects of Invention

According to the present disclosure, as described above, a novel and improved information processing apparatus in which a plurality of OSs is installed and capable of linking information among OSs, acquiring information set by some OS during activation of another OS, and performing processing by the other OS based on the acquired information regardless of the OS by which the information processing apparatus is activated and even if content set by some OS is cleared, an information processing method, and a computer program can be provided.

### Brief Description of Drawings

[Fig. 1] Fig. 1 is an explanatory view showing the configuration of an information processing apparatus 100 according to an embodiment of the present disclosure.
[Fig. 2] Fig. 2 is an explanatory view showing an example of a setting file 200 created by an application of an OS1.
[Fig. 3] Fig. 3 is an explanatory view showing a series of operations of the information processing apparatus 100 on a time axis.
[Fig. 4] Fig. 4 is a flow chart showing the operation of the information processing apparatus 100 according to an embodiment of the present disclosure.
[Fig. 5] Fig. 5 is a flow chart showing the operation of the information processing apparatus 100 according to an embodiment of the present disclosure.
[Fig. 6] Fig. 6 is an explanatory view showing an example of a warning message displayed in a display unit 110.
[Fig. 7] Fig. 7 is a flow chart showing the operation of the information processing apparatus 100 according to an embodiment of the present disclosure.
[Fig. 8] Fig. 8 is a flow chart showing the operation of the information processing apparatus 100 according to an embodiment of the present disclosure.
[Fig. 9] Fig. 9 is a flow chart showing the operation of the information processing apparatus 100 according to an embodiment of the present disclosure.
[Fig. 10] Fig. 10 is an explanatory view showing an execution outline of a conventional information processing apparatus mounted with a plurality of OSs.
[Fig. 11] Fig. 11 is an explanatory view showing the execution outline of the information processing apparatus 100 according to an embodiment of the present disclosure.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

The description will be provided in the order shown below:

### <1. An Embodiment According To The Present Disclosure>

### [1-1. Configuration of Information Processing Apparatus]

### [1-2. Operation of Information Processing Apparatus]

### <2. Conclusion>

### <1. An Embodiment According To The Present Disclosure>

### [1-1. Configuration of Information Processing Apparatus]

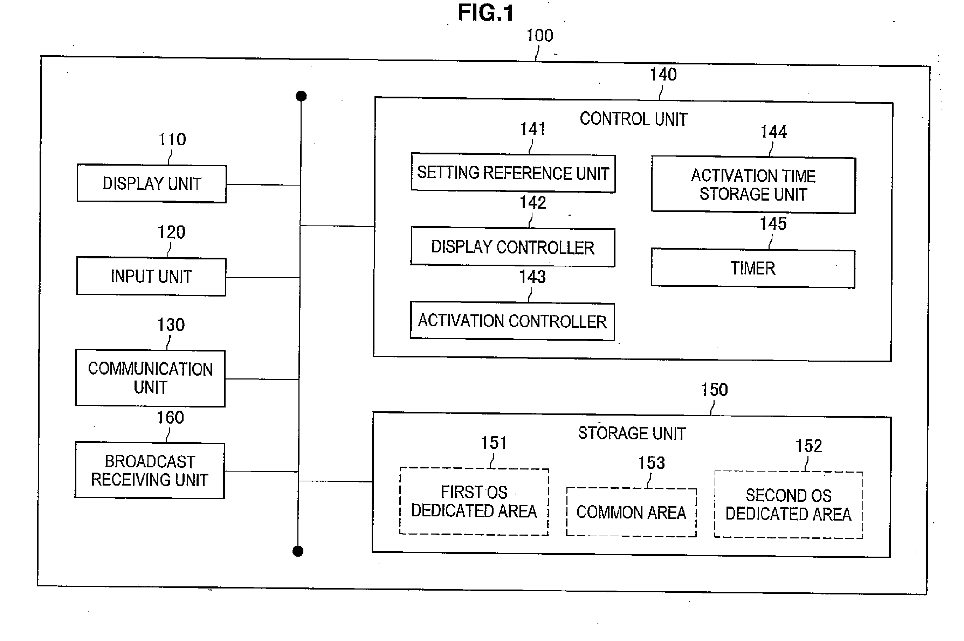

First, the configuration of an information processing apparatus according to an embodiment of the present disclosure will be described with reference to the drawings. Fig. 1 is an explanatory view showing the configuration of the information processing apparatus 100 according to an embodiment of the present disclosure. The configuration of the information processing apparatus 100 according to an embodiment of the present disclosure will be described by using Fig. 1.

The information processing apparatus 100 shown in Fig. 1 is an information processing apparatus configured so that two operating systems (OSs) can exclusively be activated and the information processing apparatus 100 is, for example, a personal computer (PC). In the description that follows, the two operating systems are distinguished as an OS1 and an OS2. The two operating systems may be of the same type or different types. In the present embodiment, the information processing apparatus 100 is configured so that the two operating systems can exclusively be activated, but the present disclosure is not limited to such an example. That is, the information processing apparatus may be configured so that three operating systems or more can exclusively be activated.

When activating the information processing apparatus 100, the user of the information processing apparatus 100 selects and activates one of the OS1 and OS2. Accordingly, the information processing apparatus 100 is not in a state in which both of the OS1 and the OS2 operate and the OS1 or the OS2 is exclusively activated. Therefore, when the OS being executed should be switched to the other OS, the user of the information processing apparatus 100 needs to shut down the information processing apparatus 100 once before activating the information processing apparatus 100 by the other OS to be used.

As shown in Fig. 1, using Fig. 1, the information processing apparatus 100 according to an embodiment of the present disclosure includes the display unit 110, an input unit 120, a communication unit 130, a control unit 140, a recording unit 150, and a broadcast receiving unit 160.

The display unit 110 displays various kinds of information and a graphical user interface (GUI) is provided by an operating system stored in, for example, the recording unit 150 to display content input by the user of the information processing apparatus 100 by using the input unit 120. The display unit 110 is constituted of, for example, a liquid crystal display, organic EL display or the like. In the present embodiment, the information processing apparatus 100 is configured to be provided with the display unit 110 therein, but the present disclosure is naturally not limited to such an example and the information processing apparatus 100 may be configured to have the display unit 110 connected thereto.

The input unit 120 is constituted of, for example, a keyboard, mouse, or another operation unit and is a device to accept an input operation into the information processing apparatus 100 by the user of the information processing apparatus 100. Further, the input unit 120 is constituted of an input control circuit that generates an input signal based on information input by the user using, for example, the above operation unit and outputs the input signal to the control unit 140. The user of the information processing apparatus 100 can input various kinds of data into or instruct processing operations to the information processing apparatus 100 by operating the input unit 120.

The communication unit 130 is a communication interface constituted of a communication device and the like to connect to a network (not shown). The communication unit 130 is, for example, a communication card for wire or wireless LAN (Local Area Network), Bluetooth, or WUSB (Wireless USB), router for optical communication, router for ADSL (Asymmetric Digital Subscriber Line), or modems for various kinds of communication. The communication unit 130 can transmit/receive signals and the like to/from the Internet or another communication device according to the predetermined protocol, for example, TCP/IP or the like. The network connected to the communication unit 130 is constituted of a network connected by wire or wirelessly and may be, for example, the Internet, home LAN, infrared-ray communication, radiofrequency wave communication, or satellite communication.

The control unit 140 functions as an arithmetic processing unit and a control apparatus, is used to control the operation of the information processing apparatus 100, and includes, for example, a CPU (Central Processing Unit) and a chip set to which the CPU is connected.

As shown in Fig. 1, the control unit 140 includes a setting reference unit 141, a display controller 142, an activation controller 143, an activation time storage unit 144, and a timer 145.

The setting reference unit 141 is used to refer to a setting file stored in a common area 153 of the recording unit 150 and created by the OS1 when the OS2 is activated. If the time when the OS1 is automatically activated is set to the activation time storage unit 144 by the setting file created by the OS1 being referred to by the setting reference unit 141 when the OS2 is activated, even if the time set to the activation time storage unit 144 is cleared by the information processing apparatus 100 being activated under the OS2, the time when the OS1 is automatically activated can be set to the activation time storage unit 144 by the OS2.

The display controller 142 is used to control the display of information in the display unit 110 and controls the display to select the OS to be activated when the information processing apparatus 100 is activated or controls the display of various kinds of information based on the function of the OS1 or the OS2 when the information processing apparatus 100 is activated under the OS 1 or the OS2.

The activation controller 143 automatically activates the information processing apparatus 100 by the OS1 when the automatic activation time set to the activation time storage unit 144 comes. Therefore, even if the information processing apparatus 100 is shut down, the activation controller 143 always monitors the time ticked by the timer 145 and when the timer 145 reaches a predetermined time before (for example, 10 minutes before) the automatic activation time set to the activation time storage unit 144, automatically activates the information processing apparatus 100 by the OS1.

Therefore, even if the information processing apparatus 100 is shut down, it is desirable to keep at least the activation controller 143, the activation time storage unit 144, and the timer 145 alive. This is because if these units are not alive, the activation controller 143 cannot automatically activate the information processing apparatus 100 by the OS1 when the decided time comes.

The activation time storage unit 144 is an example of a setting storage unit of the present disclosure and is used to store the time when the information processing apparatus 100 is automatically activated under the OS1. The time when an application of the OS1 automatically activates the information processing apparatus 100 by the OS1 while, for example, the information processing apparatus 100 is activated under the OS 1 is set to the activation time storage unit 144 and the application writes the time into the activation time storage unit 144. Such an application of the OS1 may be, for example, an application that makes a preset recording of TV programs received by the broadcast receiving unit 160. When the user of the information processing apparatus 100 sets a recording of a TV program by using an application making a preset recording of a TV program, the application writes the time when the recording starts to the activation time storage unit 144 and also creates a setting file in the common area 153 of the recording unit 150 or updates content of the setting file if the file already exists.

Incidentally, regardless of whether the information processing apparatus 100 is activated under the OS 1 or the OS2, information held in the activation time storage unit 144 is deleted when the information processing apparatus 100 is activated. Therefore, even if an application of the OS1 sets the time when the information processing apparatus 100 is automatically activated under the OS1 and the application writes the time into the activation time storage unit 144, when the information processing apparatus 100 is subsequently activated under the OS2, the information of the automatic activation time entered in the activation time storage unit 144 is cleared. The information processing apparatus 100 according to an embodiment of the present disclosure is an apparatus operating under such an assumption.

The timer 145 is, for example, a real-time clock (RTC) and is a timer continuously ticking the current time. As described above, when the timer 145 reaches a predetermined time before (for example, 10 minutes before) the automatic activation time set to the activation time storage unit 144, the activation controller 143 automatically activates the information processing apparatus 100 by the OS1.

The recording unit 150 is used to store basic files of the OS1 and the OS2, the setting file created by an application of the OS1, and other data and is constituted of, for example, an HDD (Hard Disk Drive), SSD (Solid State Drive) or the like. As shown in Fig. 1, the recording unit 150 includes a first OS dedicated area 151, a second OS dedicated area 152, and the common area 153.

The first OS dedicated area 151 is an area where the basic file of the OS1 and files that can be referred to by only the OS1 are stored. Similarly, the second OS dedicated area 152 is an area where the basic file of the OS2 and files that can be referred to by only the OS2 are stored. The common area 153 is an area permitted to be referred to by both of the OS 1 and the OS2 and, as described above, an application executed on the OS 1 to set a recording of a TV program stores a setting file in which information such as the recording start time and the like is written in the common area 153. Accordingly, even if the information processing apparatus 100 is activated under the OS2, the OS2 can refer to content of a setting file created under the OS 1 and also write information of the automatic activation time described in the setting file into the activation time storage unit 144.

The information processing apparatus 100 is activated under one of the OS 1 and the OS2. Thus, if the user chooses to activate the information processing apparatus 100 by the OS1, the control unit 140 of the information processing apparatus 100 reads the basic file of the OS1 recorded in the first OS dedicated area 151 to activate the OS1. On the other hand, if the user chooses to activate the information processing apparatus 100 by the OS2, the control unit 140 of the information processing apparatus 100 reads the basic file of the OS2 recorded in the second OS dedicated area 152 to activate the OS2. Then, regardless of activation by the OS1 or the OS2, the information processing apparatus 100 can perform processing based on content described in the setting file by any of the OS 1 and the OS2 by referring to the setting file recorded in the common area 153.

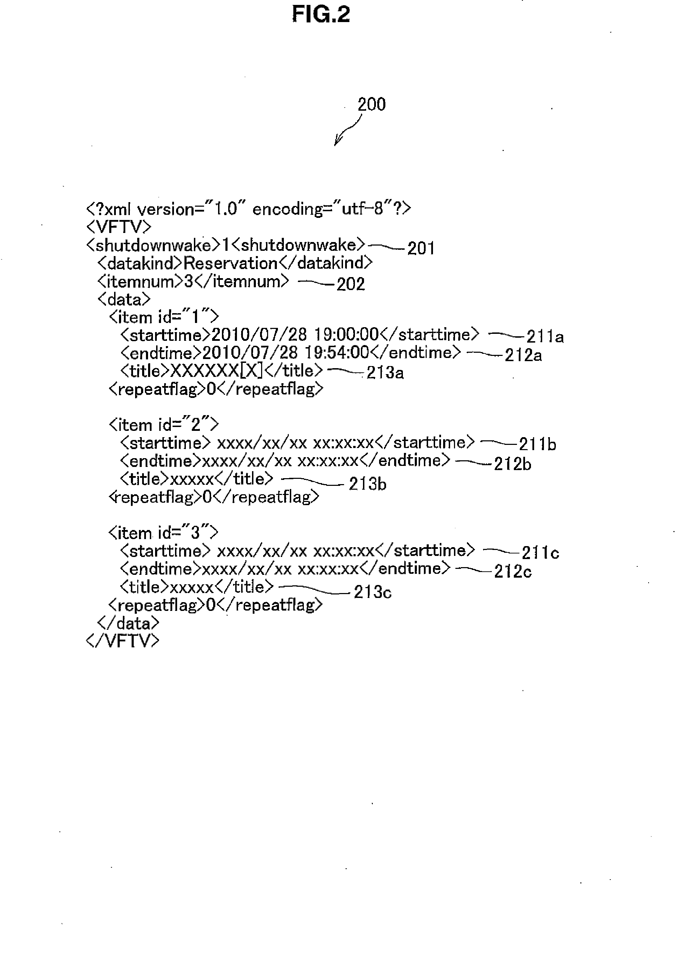

Fig. 2 is an explanatory view showing an example of the setting file 200 executed by the OS 1 and created by an application that sets a recording of a TV program when the information processing apparatus 100 according to an embodiment of the present disclosure is activated under the OS1.

When the user of the information processing apparatus 100 sets a recording of a TV program by the application, the setting file 200 described in XML (Extensible Markup Language) as shown in Fig. 2 is created in the common area 153. In Fig. 2, the setting file 200 shows a state in which automatic activation information 201 whether to permit automatic activation after shutdown, number of preset recordings 202, start times 211a to 211c of programs whose recording is set, end times 212a to 212c of programs whose recording is set, and program names 213a to 213c whose recording are described. Naturally, the format of the setting file 200 is not limited to such an example and any format that can be interpreted by any other OS than the OS that has created a setting file may be adopted.

When the user of the information processing apparatus 100 sets a recording of TV programs by the application, information of the start time, end time, and program name of programs whose recording is set by the user in the setting file 200 in the order in which settings are made. When the information processing apparatus 100 is activated under the OS2, the OS2 reads the setting file 200 during activation to acquire information of the start time, end time, and program name of programs whose recording is set by the user. Therefore, the OS2 desirably knows the file name of the setting file 200 created by the application of the OS1 in advance.

Though a detailed description will be provided later, when the OS2 is activated, the setting file 200 is read to acquire information of the start time, end time, and program name of the program set to record by the user so that when the time a predetermined time before the program set to record starts comes, the OS2 can cause the display unit 110 to display a warning message. When the user views the waning message displayed in the display unit 110, the user can determine whether to reactivate under the OS1 to make a preset recording or to continue to use the OS2.

The broadcast receiving unit 160 is used to receive television broadcasting transmitted from a broadcasting station such as digital terrestrial broadcasting and BS digital broadcasting. Television broadcasting received by the broadcast receiving unit 160 is displayed in the display unit 110 under the control of the display controller 142. The broadcast receiving unit 160 also receives data of an electronic program guide (EPG) broadcast together with television broadcasting. Data of EPG received by the broadcast receiving unit 160 is displayed in the display unit 110 by an application making a preset recording of TV programs executed by the OS 1. The user of the information processing apparatus 100 can select the program to be set to record by viewing EPG the application causes the display unit 110 to display.

In the foregoing, the configuration of the information processing apparatus 100 according to an embodiment of the present disclosure has been described by using Fig. 1. Next, the operation of the information processing apparatus 100 according to an embodiment of the present disclosure will be described by using Fig. 1.

### [1-2. Operation of the Information Processing Apparatus 100]

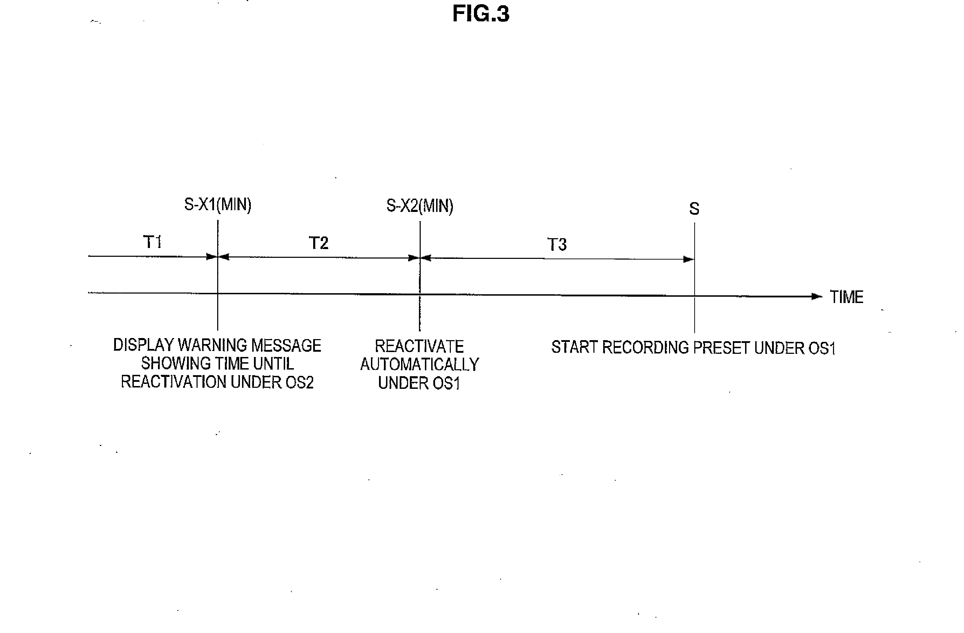

The operation when the information processing apparatus 100 is operated by the OS1 and the application making a preset recording of TV programs sets a recording of a TV program and then the OS1 is shut down and the information processing apparatus 100 is activated under the OS2 will be described below. First, a series of operations of the information processing apparatus 100 will be described on a time axis. Fig. 3 is an explanatory view showing a series of operations of the information processing apparatus 100 on a time axis.

On the time axis shown in Fig. 3, a time S indicates the recording start time preset by an application making a preset recording. When the time a predetermined time before (for example, 13 min before) the time S comes while the information processing apparatus 100 is operated by the OS2, the OS2 causes the display unit 110 to display a warning message to notify the user of the information processing apparatus 100 that the preset recording will soon start. The warning message contains the display of the time before the information processing apparatus 100 is automatically reactivated under the OS1 in a countdown form. The user can reactivate the information processing apparatus 100 by the OS1 by viewing the warning message displayed in the display unit 110.

After the OS2 causes the display unit 110 to display a warning message, when further the time a predetermined time before (for example, 10 min before) the time S comes, the OS2 forcibly starts shutdown processing to automatically reactivate the information processing apparatus 100 by the OS1. Accordingly, even if the user of the information processing apparatus 100 performs no operation of the information processing apparatus 100 after a warning message is displayed, the information processing apparatus 100 is automatically reactivated under the OS1 so that the preset recording can be started.

If the shutdown of the OS2 and reactivation under the OS1 occur in a period T2 in Fig. 3, the information processing apparatus 100 may be made not to request the input of a password when the OS1 is activated. By not requesting the input of a password when the OS 1 is activated, the information processing apparatus 100 can automatically activate the OS 1 and perform recording processing at a planned time.

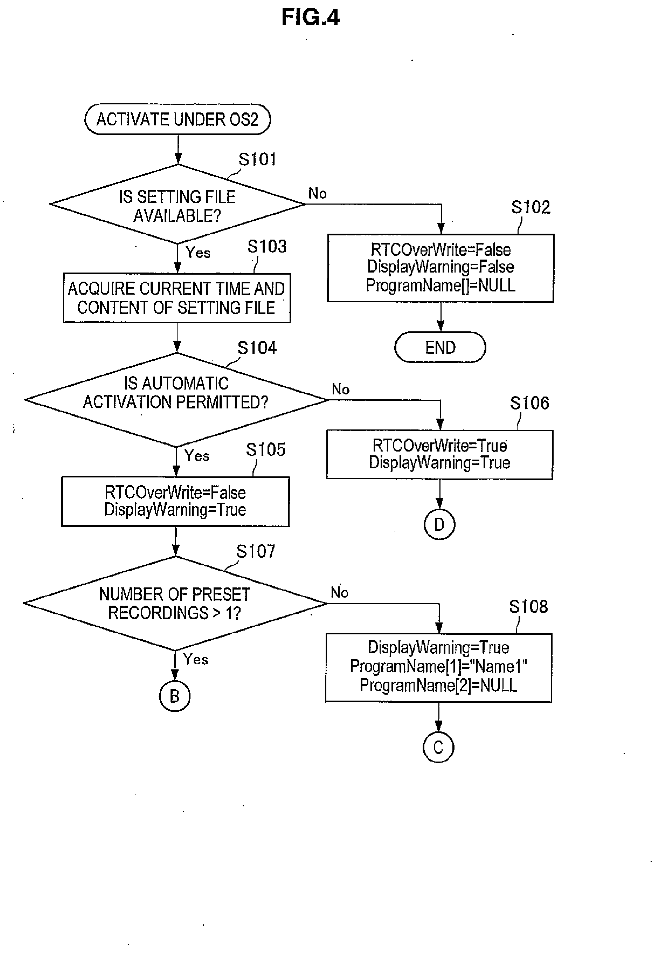

Fig. 4 is a flow chart showing the operation of the information processing apparatus 100 according to an embodiment of the present disclosure. The operation of the information processing apparatus 100 according to an embodiment of the present disclosure will be described by using Fig. 4.

Like Fig. 3 above, the flow chart in Fig. 4 shows the operation when the information processing apparatus 100 is operated by the OS1 and the application making a preset recording of TV programs sets a recording of a TV program and then the OS1 is shut down and the information processing apparatus 100 is activated under the OS2.

When the information processing apparatus 100 is activated under the OS2, information of the automatic activation time under the OS 1 stored in the activation time storage unit 144 is cleared. Therefore, if the OS2 is activated in this state and then the OS2 is terminated to shut down the information processing apparatus 100, the information processing apparatus 100 cannot be automatically activated under the OS1.

When the information processing apparatus 100 is activated under the OS2, the OS2 determines whether a setting file is available (S101). Whether the setting file is available is determined by whether the setting file is stored in the common area 153 or whether content of the setting is corrupted even if the setting file is stored in the common area 153.

If, as a result of the determination in step S101, the setting file is not available, the OS2 sets variables (step S102) before terminating the processing. More specifically, the OS2 sets "RTCOverWrite" as a variable whether to permit to overwrite activation time information in the activation time storage unit 144 to "False (do not permit to overwrite)", "DisplayWarning" as a variable to display a warning message to "False (do not display)", and "ProgramName" as a variable to store a program name displayed in a warning message to "NULL".

On the other hand, if, as a result of the determination in step S101, the setting file is available, the OS2 acquires the current time and content in the setting file (step S103). The processing is performed by the setting reference unit 141 provided in the control unit 140 by activating the OS2.

When the current time and content in the setting file are acquired by the OS2 in step S103 described above, the OS2 subsequently determines whether the information processing apparatus 100 is set to permit automatic activation (step S 104). This is because when the information processing apparatus 100 is not used, depending on the user of the information processing apparatus 100, the information processing apparatus 100 may be caused to sleep or hibernate without a complete shutdown of the information processing apparatus 100. The setting to permit automatic activation of the information processing apparatus 100 is described in, for example, the automatic activation information 201 in the above setting file 200. Incidentally, the determination may be made by, for example, the activation controller 143 provided in the control unit 140 by activating the OS2.

If, as a result of the determination in step S104, the information processing apparatus 100 is set to permit automatic activation, the OS2 sets variables (step S105). More specifically, the OS2 sets the variable "RTCOverWrite" to "True (permit to overwrite)" and the variable "DisplayWarning" to "True (display)".

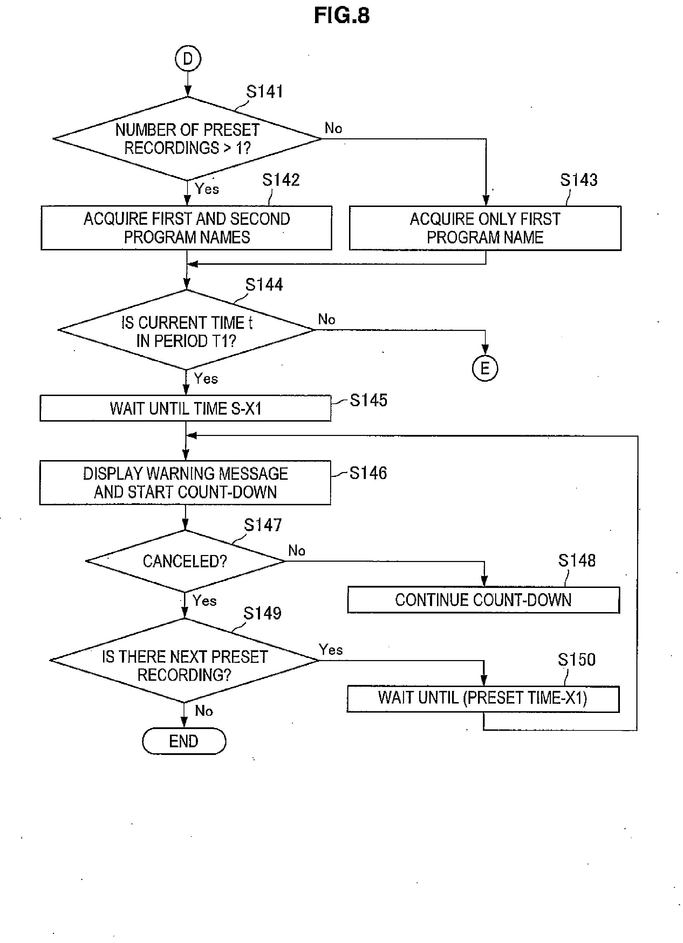

On the other hand, if, as a result of the determination in step S105, the information processing apparatus 100 is not set to permit automatic activation, the OS2 sets variables (step S106). More specifically, the OS2 sets the variable "RTCOverWrite" to "False (do not permit to overwrite)" and the variable "DisplayWarning" to "True (display)". Then, after variables are set in step S106, the processing proceeds to Fig. 8 described later.

When the OS2 sets variables in step S105, the OS2 subsequently determines whether the number of programs preset for recording is greater than 1 (step S107). If, as a result of the determination in step S107, the number of programs preset for recording is 1, the OS2 sets variables (step S108). More specifically, the OS2 sets the variable "DisplayWarning" to "True (display)", the program name in the setting file acquired in step S103 to a variable "ProgramName[1]" storing the first program name displayed in a warning message, and "NULL" to a variable "ProgramName[2]" storing the second program name.

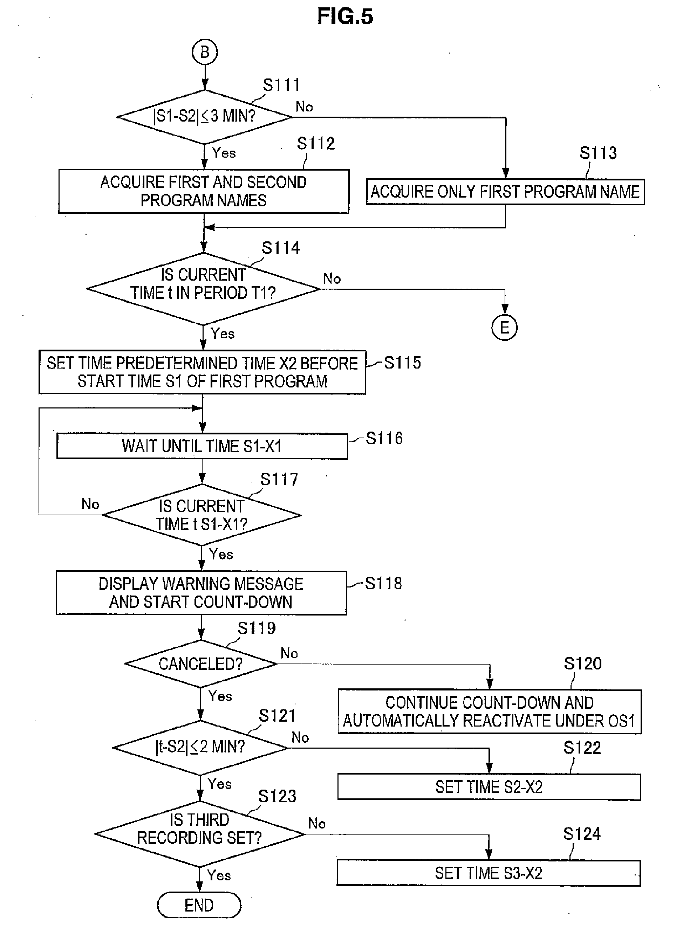

Subsequently, processing when, as a result of the determination in step S107, the number of programs preset for recording is greater than 1 will be described. Fig. 5 is an explanatory view showing the processing when, as a result of the determination in step S107, the number of programs preset for recording is greater than 1.

First, when the number of programs preset for recording is greater than 1, the setting reference unit 141 determines whether the difference between the first recording start time S 1 and the next recording start time S2 is within three minutes (step S111). If, as a result of the determination in step S111, the difference between the first recording start time S 1 and the next recording start time S2 exceeds three minutes, the setting reference unit 141 acquires the first program name and the next program name from the setting file (step S 112). On the other hand, if, as a result of the determination in step S111, the difference between the first recording start time S1 and the next recording start time S2 is within three minutes, the setting reference unit 141 acquires only the first program name from the setting file (step S 113).

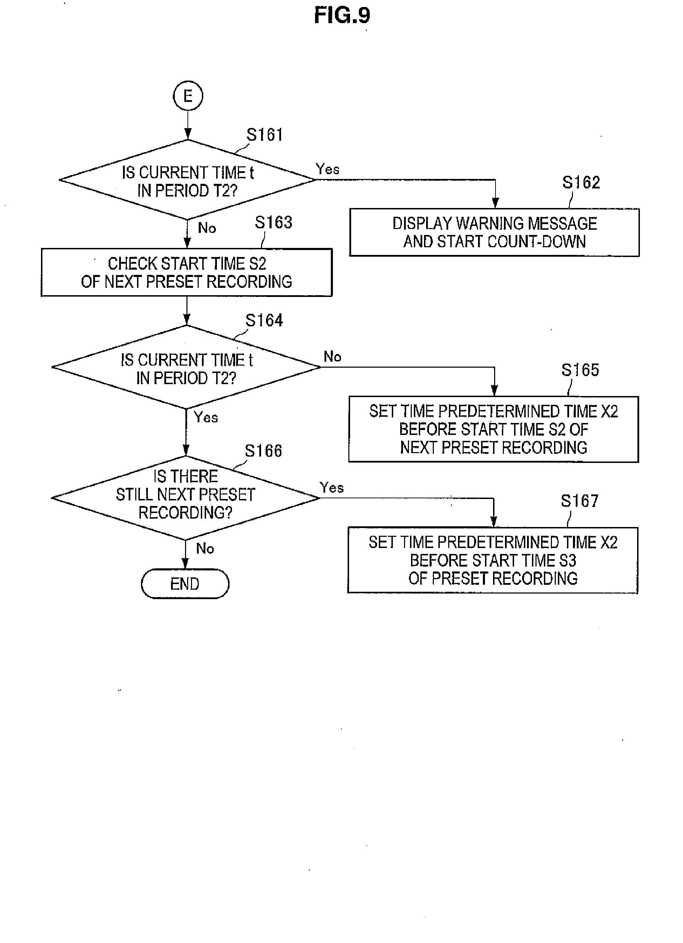

When the setting reference unit 141 acquires information of the program name(s) from the setting file in step S 112 or S 113, the activation controller 143 determines whether the current time t (time of the timer 145) is in a period T1 shown in Fig. 3, that is, the current time t is before a predetermined time X1 before the first recording start time S1 (step S 114). If, as a result of the determination in step S 114, the current time t is not in the period T1 shown in Fig. 3, the processing proceeds to Fig. 9 shown later.

On the other hand, if, as a result of the determination in step S 114, the current time t is in the period T1 shown in Fig. 3, the activation controller 143 sets the time a predetermined time X2 before the start time S1 of the first program to the activation time storage unit 144 (step S115). With the time the predetermined time X2 before the start time S1 of the first program being set to the activation time storage unit 144, even if the user of the information processing apparatus 100 terminates the OS2 in this state to shut down the information processing apparatus 100, when the time the predetermined time X2 before the start time S1 of the first program comes, the information processing apparatus 100 can automatically be activated under the OS 1.

Then, the display controller 142 waits until the time of the timer 145 becomes (S1-X1) (step S116) to determine whether the current time t (time of the timer 145) is the time (S1-X1) (step S 117).

Then, when the current time t (time of the timer 145) becomes the time (S1-X1), the display controller 142 causes the display unit 110 to display a predetermined warning message and also causes the display unit 110 to display the time before automatic reactivation under the OS1 in a countdown form (step S 118). The warning message the display unit 110 is caused to display in step S 118 may display the set start time of preset recording and the name of the program that will start at the start time of preset recording to notify the user of the information processing apparatus 100 that the start time of preset recording is pressing. If the reproduction and second program names are acquired in step S 112, the display controller 142 may cause the display unit 110 to display the reproduction and second program names in a warning message.

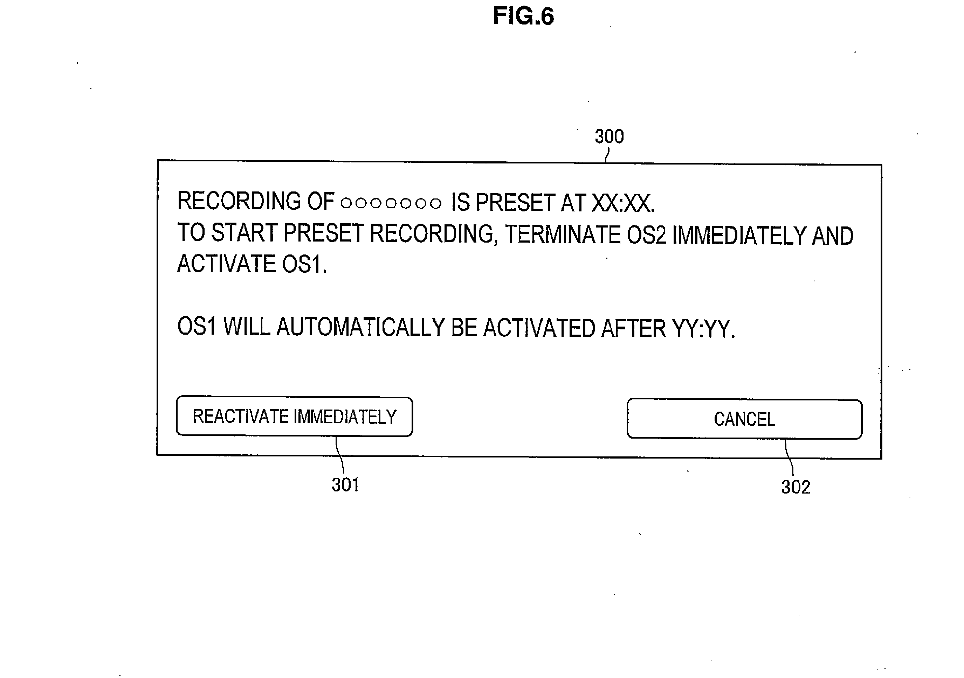

Fig. 6 is an explanatory view showing an example of a warning message 300 the display controller 142 causes the display unit 110 to display. In the warning message 300 shown in Fig. 6, the time at which a recording is preset and a program name are displayed. Also in the warning message 300 shown in Fig. 6, the time before automatic reactivation under the OS1 is displayed in a countdown form.

In the warning message 300 shown in Fig. 6, a reactivation button 301 to forcibly reactivate the information processing apparatus 100 by the user of the information processing apparatus 100 and a cancel button 302 to prevent the information processing apparatus 100 from being reactivated under the OS1 by deleting the warning message 300 from the screen. The warning message 300 is displayed in the display unit 110 until the OS 1 is automatically reactivated unless the user performs an operation on the reactivation button 301 or the cancel button 302. Then, if the user performs an operation on the reactivation button 301, the information processing apparatus 100 is reactivated by the activation controller 143 under the OS1 and if the user performs an operation on the cancel button 302, the display controller 142 deletes the warning message 300.

With the display unit 110 being caused by the display controller 142 to display such a warning message by the processing of the OS2, the user of the information processing apparatus 100 can be notified that the time at which a program recording is preset is pressing and also the user is enabled to determine whether to reactivate by the OS1 or to continue to use the OS2.

The display controller 142 determines whether the display of a warning message the display unit 110 is caused to display is canceled by the user (step S119). If, as a result of the determination in step S119, the display of a warning message is not canceled by the user, the display controller 142 continues the countdown in the warning message and when the time of automatic reactivation under the OS1 comes, the activation controller 143 forces the OS2 to terminate to perform reactivation processing under the OS1 (step S120).

On the other hand, if, as a result of the determination in step S 119, the display of a warning message is canceled by the user, the display controller 142 causes the display unit 110 to delete the warning message and the activation controller 143 determines whether the difference between the current time t and the recording start time S2 of the second program is within X2 minutes (step S121).

If, as a result of the determination in step S121, the difference between the current time t and the recording start time S2 of the second program is not within X2 minutes, the activation controller 143 sets the time the predetermined time X2 before the start time S1 of the second program to the activation time storage unit 144 (step S122). On the other hand, if, as a result of the determination in step S121, the difference between the current time t and the recording start time S2 of the second program is within X2 minutes, the activation controller 143 determines whether the third recording is set (step S123).

If, as a result of the determination in step S123, the third recording exists, the activation controller 143 sets the time the predetermined time X2 before the start time S 1 of the third program to the activation time storage unit 144 (step S124). On the other hand, if, as a result of the determination in step S123, the third recording does not exist, the processing is directly terminated.

Thus, by reading the setting file by the OS1 during activation of the OS2 and using information of the recording start time described in the setting file, the information processing apparatus 100 according to an embodiment of the present disclosure can cause the display unit 110 to display a warning message in advance before the recording start time. Also by acquiring information of the recording start time described in the setting file, the information processing apparatus 100 according to an embodiment of the present disclosure can write the information of the recording start time to the control unit 140 and even if the OS2 is shut down, the information processing apparatus 100 can automatically be activated under the OS1 in time for the recording start time.

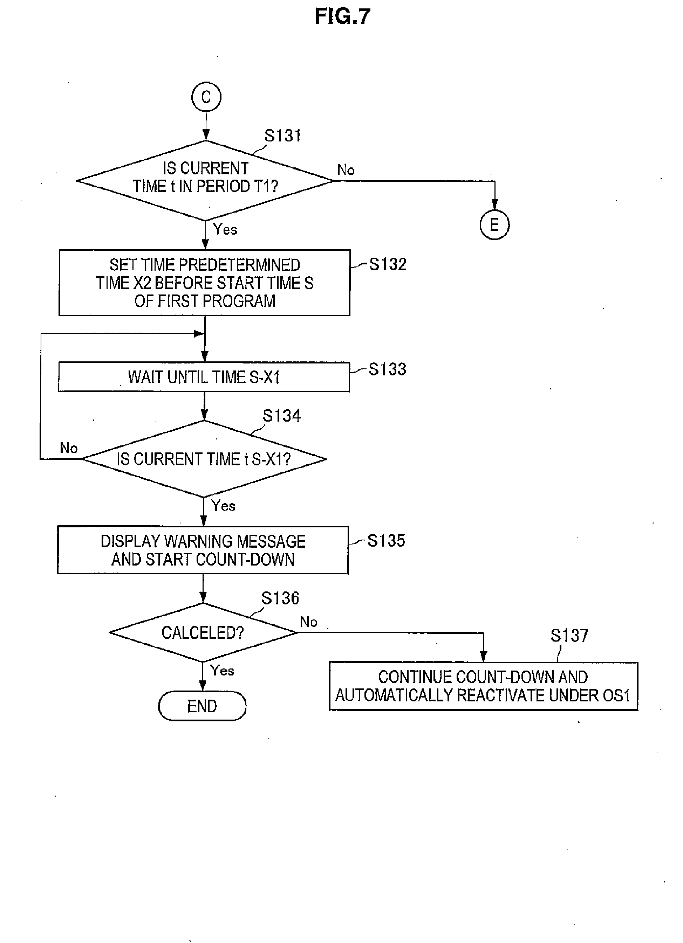

Subsequently, the processing when, as a result of the determination in step S107, the number of programs preset for recording is only one will be described. Fig. 7 is a flow chart showing the operation of the information processing apparatus 100 according to an embodiment of the present disclosure and an explanatory view showing the processing when, as a result of the determination in step S107, the number of programs preset for recording is only one.

If the number of programs preset for recording is only one, the activation controller 143 first determines whether the current time t (time of the timer 145) is in the period T1 shown in Fig. 3, that is, the current time t is before the predetermined time X1 before the first recording start time S 1 (step S 131). If, as a result of the determination in step S131, the current time t is not in the period T1 shown in Fig. 3, the processing proceeds to Fig. 9 shown later.

On the other hand, if, as a result of the determination in step S 131, the current time t is in the period T1 shown in Fig. 3, the activation controller 143 sets the time the predetermined time X2 before the start time S1 of the first program to the activation time storage unit 144 (step S132). With the time the predetermined time X2 before the start time S 1 of the first program being set to the activation time storage unit 144, even if the user of the information processing apparatus 100 terminates the OS2 in this state to shut down the information processing apparatus 100, when the time the predetermined time X2 before the start time S 1 of the first program comes, the information processing apparatus 100 can automatically be activated under the OS1.

Then, the display controller 142 waits until the time of the timer 145 becomes (S1-X1) (step S133) to determine whether the current time t (time of the timer 145) is the time (S1-X1) (step S134).

Then, when the current time t (time of the timer 145) becomes the time (S1-X1), the display controller 142 causes the display unit 110 to display a predetermined warning message and also causes the display unit 110 to display the time before automatic reactivation under the OS1 in a countdown form (step S135).

The display controller 142 determines whether the display of a warning message the display unit 110 is caused to display is canceled by the user (step S136). If, as a result of the determination in step S136, the display of a warning message is not canceled by the user, the display controller 142 continues the countdown in the warning message and when the time of automatic reactivation under the OS1 comes, the activation controller 143 forces the OS2 to terminate to perform reactivation processing under the OS1 (step S 137).

On the other hand, if, as a result of the determination in step S 136, the display of a warning message is canceled by the user, the display controller 142 causes the display unit 110 to delete the warning message and the OS2 terminates a sequence of processing.

Subsequently, the processing after the OS2 sets variables in step S106 in Fig. 4 will be described. Fig. 8 is a flow chart showing the operation of the information processing apparatus 100 according to an embodiment of the present disclosure and an explanatory view showing the processing after the OS2 sets variables in step S 106.

The setting reference unit 141 first refers to the setting file to determine whether the number of preset recordings is greater than 1 (step S 141). If, as a result of the determination in step S 141, the number of preset recordings is greater than 1, the setting reference unit 141 acquires program names of the first and second preset recordings (step S142). On the other hand, if, as a result of the determination in step S141, the number of preset recordings is only one, the setting reference unit 141 acquires the program name of only the first reservation (step S143).

When the setting reference unit 141 acquires the program name(s) in step S142 or S143, the activation controller 143 determines whether the current time t (time of the timer 145) is in the period T1 shown in Fig. 3, that is, the current time t is before the predetermined time X1 before the first recording start time S1 (step S 144). If, as a result of the determination in step S 114, the current time t is not in the period T1 shown in Fig. 3, the processing proceeds to Fig. 9 shown later.

On the other hand, if, as a result of the determination in step S 144, the current time t is in the period T1 shown in Fig. 3, the display controller 142 waits until the time of the timer 145 becomes (S1-X1) (step S145) and when the current time t (time of the timer 145) becomes the time (S1-X1), the display controller 142 causes the display unit 110 to display a predetermined warning message and also causes the display unit 110 to display the time before automatic reactivation under the OS 1 in a countdown form (step S 146).

The display controller 142 determines whether the display of a warning message the display unit 110 is caused to display is canceled by the user (step S147). If, as a result of the determination in step S148, the display of a warning message is not canceled by the user, the display controller 142 continues the countdown in the warning message (step S 148).

On the other hand, if, as a result of the determination in step S 148, the display of a warning message is canceled by the user, the display controller 142 causes the display unit 110 to delete the warning message. Then, the setting reference unit 141 determines whether the next preset recording exists (step S 149).

If, as a result of the determination in step S149, the next preset recording exists, the display controller 142 waits until the time of the timer 145 becomes the time the predetermined time X1 before the start time of the preset recording (step S150) and when the time comes, the display controller 142 returns to step S 146 to cause the display unit 110 to display a predetermined warning message. On the other hand, if, as a result of the determination in step S149, the next preset recording does not exist, the OS2 terminates a sequence of processing.

Subsequently, the processing when the current time t is not in the period T1 in Fig. 3 in step S114 of Fig. 5, step S131 of Fig. 7, or step S144 of Fig. 8 will be described. Fig. 9 is a flow chart showing the operation of the information processing apparatus 100 according to an embodiment of the present disclosure and an explanatory view showing the processing after the current time t is determined to be not in the period T1 in Fig. 3 in step S 114 of Fig. 5, step S131 of Fig. 7, or step S144 of Fig. 8.

First, the activation controller 143 determines whether the current time t (time of the timer 145) is in the period T2 shown in Fig. 3, that is, the current time t is within T2 from the predetermined time X1 before the first recording start time S1 (step S 161).

If, as a result of the determination in step S161, the current time t (time of the timer 145) is in the period T2 shown in Fig. 3, the display controller 142 immediately causes the display unit 110 to display a predetermined warning message and also causes the display unit 110 to display the time before automatic reactivation under the OS1 in a countdown form (step S162). The processing after the display of a warning message is the same as the above processing.

On the other hand, if, as a result of the determination in step S161, the current time t (time of the timer 145) is not in the period T2 shown in Fig. 3, the setting reference unit 141 checks the start time S2 of a preset recording if the next preset recording exists (step S163). Then, the activation controller 143 determines whether the current time t (time of the timer 145) is in the period T2 or the period T3 shown in Fig. 3 in the preset recording, that is, the current time t is after the predetermined time X1 from the first recording start time S1 (step S164).

If, as a result of the determination in step S164, the current time (time of the timer 145) is not in the period T2 or the period T3 shown in Fig. 3, the current time t is determined to be in the period T1 and the activation controller 143 sets the time the predetermined time X2 before the start time S2 of the second program to the activation time storage unit 144 (step S165). With the time the predetermined time X2 before the start time S2 of the second program being set to the activation time storage unit 144, even if the user of the information processing apparatus 100 terminates the OS2 in this state to shut down the information processing apparatus 100, when the time the predetermined time X2 before the start time S2 of the second program comes, the information processing apparatus 100 can automatically be activated under the OS 1. The processing after the time is set to the activation time storage unit 144 is the same as the above processing.

On the other hand, if, as a result of the determination in step S164, the current time t (time of the timer 145) is in the period T2 or the period T3 shown in Fig. 3, the setting reference unit 141 further determines whether the next preset recording exists (step S166). If, as a result of the determination in step S166, the next preset recording exists, the activation controller 143 sets the time the predetermined time X2 before the start time S3 of the preset recording to the activation time storage unit 144 (step S167). With the time the predetermined time X2 before the start time S3 of the third program being set to the activation time storage unit 144, even if the user of the information processing apparatus 100 terminates the OS2 in this state to shut down the information processing apparatus 100, when the time the predetermined time X2 before the start time S3 of the third program comes, the information processing apparatus 100 can automatically be activated under the OS1. The processing after the time is set to the activation time storage unit 144 is the same as the above processing.

On the other hand, if, as a result of the determination in step S166, no preset recording exists, the OS2 directly terminates the processing. By performing the processing described above, after the first reservation passes the period T1, a preset recording set by the OS1 can be started by setting the preset recording times for subsequent reservations to the activation time storage unit 144 even if the information processing apparatus 100 is activated under the OS2.

In the foregoing, the operation of the information processing apparatus 100 according to an embodiment of the present disclosure has been described. Thus, even if information of the automatic activation time by the OS1 stored in the activation time storage unit 144 is deleted by the information processing apparatus 100 according to an embodiment of the present disclosure being activated under the OS2, the OS2 can write information of the automatic activation time by the OS1 to the activation time storage unit 144 by referring to content of the setting file 200.

### <2. Conclusion>

As described above, the information processing apparatus 100 according to an embodiment of the present disclosure stores a setting file in which the automatic activation time set by an application of the OS 1 is described in the common area 153 of the recording unit 150 so that when the information processing apparatus 100 is activated under the OS2, information of the automatic activation time set by the application of the OS1 can be acquired by reading the setting file.

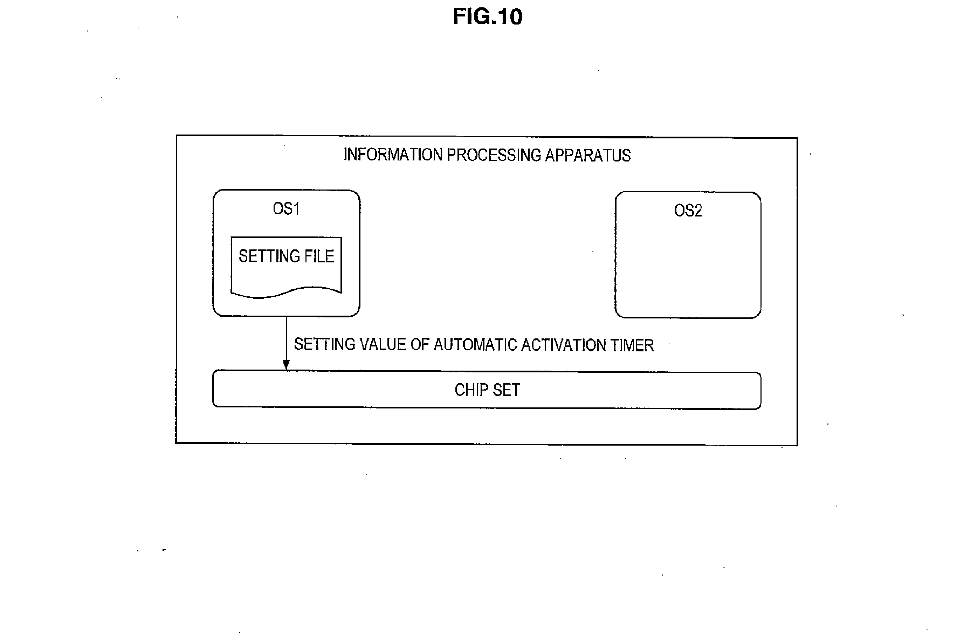

Fig. 10 is an explanatory view showing an execution outline of a conventional information processing apparatus mounted with a plurality of OSs. In a conventional information processing apparatus mounted with a plurality of OSs, a setting file created by an application of the OS 1 is stored in a dedicated area of the OS1 and thus, the OS2 cannot refer to the setting file. Therefore, as a result, when an information processing apparatus is activated under the OS2 and then the information processing apparatus is shut down, a problem arises that an activation reservation time in a list held by the OS1 is not set to the chip set.

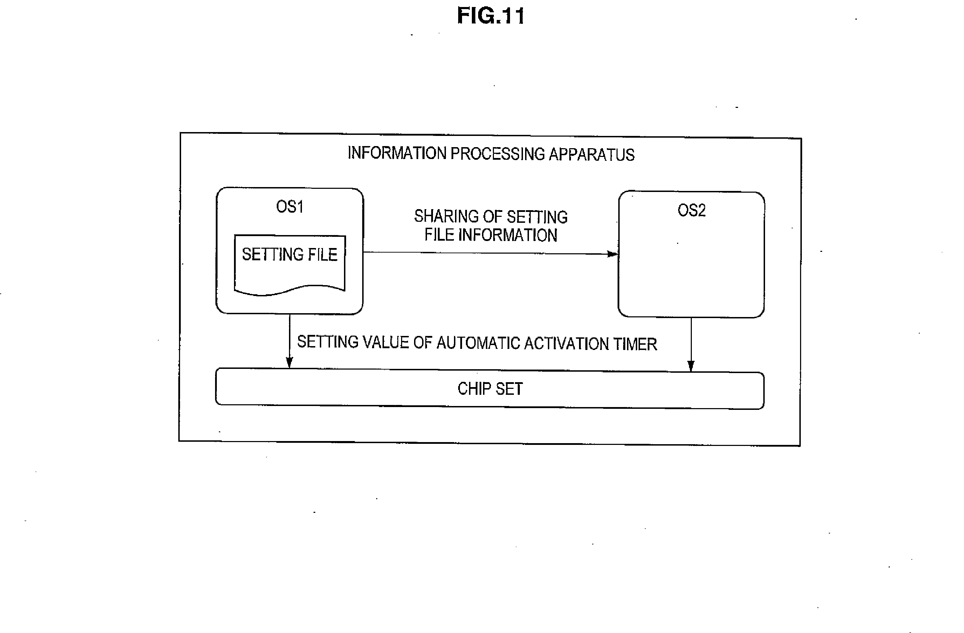

Fig. 11 is an explanatory view showing the execution outline of the information processing apparatus 100 according to an embodiment of the present disclosure. In the information processing apparatus 100 according to an embodiment of the present disclosure, information of a setting file created by an application of the OS1 can be shared by both of the OS1 and the OS2. Therefore, even if the information processing apparatus 100 is activated under the OS2 and then the information processing apparatus 100 is shut down, the activation preset time in a list held by the OS1 can be set to the chip set.

Then, when activated under the OS2, the information processing apparatus 100 according to an embodiment of the present disclosure reads content of a setting file created by an application of the OS1 to acquire the content so as to be able to perform processing based on the content. As described in the above description, when the OS2 is activated, the OS2 reads content of the setting file to acquire information of the start time of preset recording.

Then, when the start time of preset recording approaches, the OS2 causes the display unit 110 to display a warning message via the display controller 142 and also starts the countdown of the time before automatic activation by the OS1. Accordingly, the user of the information processing apparatus 100 can grasp that the start time of processing executed by the OS1 is pressing even in a state in which the information processing apparatus 100 is activated under the OS2.

The preferred embodiments of the present invention have been described above with reference to the accompanying drawings, whilst the present invention is not limited to the above examples, of course. A person skilled in the art may find various alternations and modifications within the scope of the appended claims, and it should be understood that they will naturally come under the technical scope of the present invention.

### Reference Signs List

- 100: Information processing apparatus
- 110: Display unit
- 120: Input unit
- 130: Communication unit
- 140: Control unit
- 141: Setting reference unit
- 142: Display controller
- 143: Activation controller
- 144: Activation time storage unit
- 145: Timer
- 150: Recording unit
- 151: First OS dedicated area
- 152: Second OS dedicated area
- 153: Common area
- 160: Broadcast receiving unit
- 200: Setting file
- 201: Automatic activation information
- 202: Number of preset recordings
- 211 a to 211c: Start time
- 212a to 212c: End time
- 213a to 213c: Program name

## Claims

1. An information processing apparatus comprising:
a recording unit in which a plurality of operating systems are recorded in dedicated areas of the operating systems and information set by at least the one operating system is recorded in a common area that is capable of being referred to by any of the plurality of operating systems; and
a control unit that includes a setting storage unit in which the information set by the operating system having set the information to the common area is stored and a stored setting is deleted when any of the plurality of operating systems is activated, and refers to the set information while another operating system different from the operating system having set the information to the common area is active, the other operating system performing specific processing based on the information before performing processing based on the setting in the operating system having set the information to the common area.

2. The information processing apparatus according to claim 1,
wherein the control unit includes an activation controller that controls automatic activation, and wherein the activation controller manages a time of automatic activation under the operating system having set the information to the common area as the specific processing during operation under the other operating system.

3. The information processing apparatus according to claim 2,
wherein the control unit further includes a setting reference unit that refers to the information set to the common area, and
wherein the activation controller acquires a time specified in a setting referred to by the setting reference unit and causes a message display when a predetermined time before the time comes.

4. The information processing apparatus according to claim 3,
wherein the setting storage unit stores the time of the automatic activation under the operating system having set the information to the common area, and
wherein the activation controller stores the time acquired by the setting reference unit in the setting storage unit before terminating the other operating system.

5. The information processing apparatus according to claim 4, wherein the setting reference unit refers to the information about whether to permit the automatic activation specified in the setting referred to by the setting reference unit and, when the automatic activation is not permitted, the activation controller does not store the time acquired by the setting reference unit in the setting storage unit before terminating the other operating system.

6. The information processing apparatus according to claim 1, further comprising:
a broadcast receiving unit that receives television broadcasting,
wherein the information set to the common area is information about a preset recording time of the television broadcasting received by the broadcast receiving unit.

7. The information processing apparatus according to claim 6,
wherein the control unit includes an activation controller that controls automatic activation, and wherein the activation controller performs control to cause the automatic activation under the operating system having set the information to the common area at a time a predetermined time before a recording start time that is the information about the preset recording time.

8. An information processing method comprising:
recording a plurality of operating systems in dedicated areas of the operating systems and recording information set by at least the one operating system in a common area that is capable of being referred to by any of the plurality of operating systems;
storing the information set by the operating system having set the information to the common area and deleting a stored setting when any of the plurality of operating systems is activated; and
referring to the set information while another operating system different from the operating system having set the information to the common area is active and causing the other operating system to perform specific processing based on the information before performing processing based on the setting in the operating system having set the information to the common area.

9. A computer program for causing a computer to execute:
recording a plurality of operating systems in dedicated areas of the operating systems and recording information set by at least the one operating system in a common area that is capable of being referred to by any of the plurality of operating systems;
storing the information set by the operating system having set the information to the common area and deleting a stored setting when any of the plurality of operating systems is activated; and
referring to the set information while another operating system different from the operating system having set the information to the common area is active and causing the other operating system to perform specific processing based on the information before performing processing based on the setting in the operating system having set the information to the common area.
